# EUROPÄISCHE PATENTSCHRIFT

(11) **EP 1 298 077 B1**
(45) Veröffentlichungstag und Bekanntmachung des Hinweises auf die Patenterteilung: **14.12.2005**
(21) Anmeldenummer: 02020216.4
(22) Anmeldetag: 10.09.2002
(51) Int. Cl.: B65G 17/12, B65G 17/36, B65G 19/22, A01F 12/46

(54) **Gutförderer**
Crop feeding device
Dispositif de transport de récolte

(30) Priorität: 28.09.2001 DE 10148124
(43) Veröffentlichungstag der Anmeldung: 02.04.2003
(73) Patentinhaber: CLAAS Selbstfahrende Erntemaschinen GmbH, 33428 Harsewinkel (DE)
(72) Erfinder: Wesselmann, Winfried, 48231 Warendorf (DE)

(56) Entgegenhaltungen:
- DE-B- 1 274 969
- GB-A- 2 153 645
- US-A- 5 380 247
- US-A- 5 736 652
- PATENT ABSTRACTS OF JAPAN vol. 010, no. 025 (M-450), 31. Januar 1986 (1986-01-31) & JP 60 183415 A (SAIKA GIJUTSU KENKYUSHO), 18. September 1985 (1985-09-18)

## Beschreibung

Die Erfindung betrifft einen Gutförderer im wesentlichen bestehend aus einer zumindest teilweise von einem Gehäuse umgebenen Endlosförderkette, an der in regelmäßigen Abständen Transportpaddel mittels Laschen befestigt sind.

Gutförderer der obengenannten Art werden beispielsweise als sogenannte Elevatoren zum Transport von Kömergut eingesetzt. Wegen des nicht vermeidbaren Durchhangs der Endloskette gelangen die einzelnen Paddel immer wieder mit der inneren Wandung des Elevatorschachtes in Berührung. Um die hierdurch hervorgerufenen Stöße, die zu einem unruhigen Lauf des Kettentriebes führen, und zum anderen Beschädigungen hervorrufen und Lärm verursachen, möglichst gering zu halten, ist es aus der Praxis bekannt, die Paddel aus weichem Material wie beispielsweise gewebeverstärkten Gummiplatten herzustellen.

Solange der Querschnitt eines Förderschachtes und somit die Größe der Förderpaddel ein bestimmtes Maß nicht überschreiten, können die Paddel über Laschen direkt an der Förderkette befestigt werden. Die Paddel weisen dann noch die zum Fördern notwendige Formstabiliät auf, siehe z.B. GB 2 153 645 A. Bei zunehmender Leistungssteigerung und damit erforderlicher Vergrößerung der Gutaufnahmefläche der Transportpaddel ist deren Stabilität allerdings nicht mehr ausreichend. Aus diesem Grund müssen sie entweder aus sehr dickem Material hergestellt oder beispielsweise mit Metallplatten verstärkt werden. In beiden Fällen wird hierdurch das Gewicht der Paddel und somit die notwendige Antriebsenergie für die Förderkette wesentlich erhöht.

Aufgabe der Erfindung ist es die beschriebenen Nachteile des Standes der Technik zu vermeiden.

In dem die Paddel aus zumindest einem Paddel-Formteil bestehen, welches aus einem inneren und einem äußeren Bereich besteht, wobei der innere Bereich eine höhere Steifigkeit als der äußere Bereich aufweist, wird sichergestellt, dass derart ausgeführte Paddel über einen höher steifen inneren Bereich und einen elastischen Außenbereich verfügen.

In vorteilhafter Weiterbildung kann die sich ändernde Steifigkeit des Paddel-Formteils dadurch erreicht werden, dass der Querschnitt des Paddel-Formteils vom Innen- zum Außenbereich abnimmt.

Eine besonders wirkungsvolle Realisierung der sich ändernden Steifigkeit kann dann realisiert werden, wenn das Paddel-Formteil aus einem härtbaren elastischem Kunststoff besteht und der innere Bereich durch Härtung die höhere Steifigkeit erlangt.

Um die Nachteile des beschriebenen Standes der Technik zu vermeiden, wird in einer weiteren erfindungsgemäßen Ausführungsform vorgeschlagen, dass eine Vielzahl der Paddel von zumindest einem Paddel-Innenteil und wenigstens einem damit in Wirkverbindung stehenden Paddel-Außenteil gebildet werden, wobei das zumindest eine Paddel-Innenteil eine höhere Steifigkeit als das wenigstens eine Paddel-Außenteil aufweist. Aufgrund einer derartigen Ausbildung kann ein Paddel äußerst leicht und dennoch stabil ausgeführt werden, indem das Paddel-Innenteil aus einem sehr formstabilen leichtem Material besteht, welches von einem weicheren äußeren Teil gleichsam eingerahmt wird. Während das Paddel-Innenteil die Festigkeit garantiert, fängt das Paddel-Außenteil nicht vermeidbare Stöße, hervorgerufen durch die Berührung eines Paddels mit dem Elevatorschacht während der Förderung, auf.

Auf vorteilhafte Weise weist das Paddel eine im wesentlichen ebene Grundfläche auf. Hierdurch wird die direkte Messung des von einem Paddel geförderten Gutes beispielsweise mittels einer Lichtschranke begünstigt.

Ein weiteres Merkmal der Erfindung wird darin gesehen, dass beide Paddelteile formschlüssig und/oder kraftschlüssig miteinander verbunden sind. Die miteinander zu verbindenden Randbereiche der Paddelteile umgreifen dabei einander.

Ein wesentliches Merkmal der Erfindung ist darin zu sehen, dass das Paddel-Innenteil an seinem äußeren, dem Elevatorgehäuse zugewandtem Umfang Aufnahmeausnehmungen aufweist. Der Vorteil derartiger Aufnahmeausnehmungen besteht im wesentlichen in einem einwandfreien Formschluss zwischen den miteinander zu verbindenden Paddelteilen. Selbstverständlich ist es auch denkbar, mindestens ein Paddel-Außenteil an seinem dem Elevatorgehäuse abgewandtem Umfang mit Aufnahmeausnehmungen auszubilden. Ein weiteres Merkmal der Erfindung ist darin zu sehen, dass beide Paddelteile aus Kunststoff bestehen und miteinander sowohl kraftals auch formschlüssig verbunden sind. Dies hat den Vorteil, dass die Verbindung auf einfache Art und Weise in einem Arbeitsvorgang hergestellt werden kann. Als Kunststoff kann Mehrkomponentenmaterial eingesetzt werden.

Die Erfindung schlägt ferner vor, dass das Paddel-Innenteil zumindest an seinem äußeren dem Gehäuse des Elevators zugewandtem Umfang mit einem im Vergleich zum Material des Paddel-Innenteils weicherem Kunststoff umspritzt ist. Das Paddel-Innenteil kann beispielsweise aus Propylen und das Paddel-Außenteil beispielsweise aus thermoplastischen Elastomeren bestehen, wobei bedarfsweise dem Propylen Glasfaser zwecks Stabilisierung zugemischt sein kann.

Es ist sinnvoll, den Paddel-Innenteil mit einem Befestigungsansatz zu versehen, wodurch eine einfache Möglichkeit geschaffen ist, ein Paddel mit der Endlosförderkette zu verbinden. Dabei ist es mit Hinblick auf eine rationelle Fertigung vorteilhaft, den Befestigungsansatz einstückig mit dem Paddel-Innenteil auszubilden.

Jeder Befestigungsansatz weist Zapfen auf, in die Gewindehülsen eingebettet sind. Die Gewindehülsen bestehen vorzugsweise aus Metall, so dass eine feste Verschraubung der Paddel mit der Endloskette gewährleistet ist. Um zu verhindern, dass sich die Gewindehülsen in dem Befestigungsansatz verdrehen weisen sie Verdrehsicherungen auf. Die Gewindehülsen können in einem Arbeitsvorgang bei der Herstellung eines Paddelteils in dieses eingegossen werden.

Ein weiteres wesentliches Merkmal der Erfindung ist darin zu sehen, dass der dem Gehäuse des Elevators zugewandte äußere Bereich des Paddel-Innenteits beidseitig abgestuft ausgebildet ist und in diesem Bereich Aufnahmeausnehmungen aufweist. So zu verfahren gewährleistet, dass das den äußeren Rand des Paddel-Innenteils umgreifende Paddel-Außenteil im Verbindungsbereich eine für eine stabile verbindung ausreichende Wandstärke aufweist.

Weitere spezielle Merkmale der Erfindung sind in den Unteransprüchen näher definiert.

Im Folgenden soll die Erfindung anhand mehrerer Figuren näher erläutert werden.

Dabei zeigt:
- Fig. 1: den oberen Teil eines Elevatorschachtes mit innen liegender mit Paddeln besetzter Endlosförderkette,
- Fig. 2: einige Kettenglieder mit einem daran befestigtem Paddel perspektivisch,
- Fig. 3: das in Fig. 2 gezeigte Paddel von unten,
- Fig. 4: ein Paddel befestigt an einer Kette in Vorderansicht,
- Fig. 5: eine Schnittdarstellung gemäß der Linie V-V nach Fig. 4,
- Fig. 6: das in Fig. 4 dargestellte Paddel in Draufsicht,
- Fig. 7: eine im Vergleich zu Fig. 2 abgewandelte Form eines Paddels
- Fig. 8: das in Fig. 7 gezeigte Paddel in Seitenansicht,
- Fig. 9: in perspektivischer Darstellung von unten betrachtet ein Paddel-Innenteil in teilweiser Darstellung

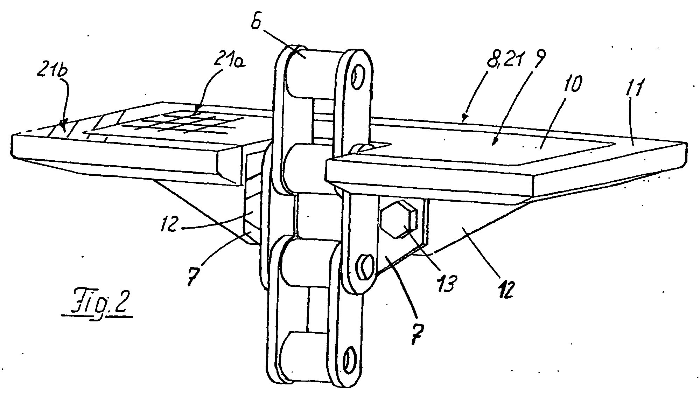

Mit 1 ist der obere Teil eines Elevatorschachtes 2 bezeichnet, der eine Auswurföffnung 3 aufweist. Der Elevatorschacht 2 ist teilweise durch eine mittlere Wand 4 getrennt. Oberhalb dieser Wand 4 ist ein Umlenkrad 5 gelagert, das von einer Förderkette 6 umschlungen ist. Mit dieser Förderkette 6 sind in regelmäßigen Abständen über Laschen 7 Paddel 8 verschraubt, die aus einem Mehrkomponentenmaterial bestehen. Diese Komponenten werden zweckmäßigerweise in einem Arbeitsgang miteinander in Wirkverbindung gebracht. Die Paddel 8 weisen gemäß Fig. 1 eine ebene Auflagefläche 9 auf, die es ermöglicht, den Beladezustand beispielsweise mittels Fototaster einwandfrei zu ermitteln.

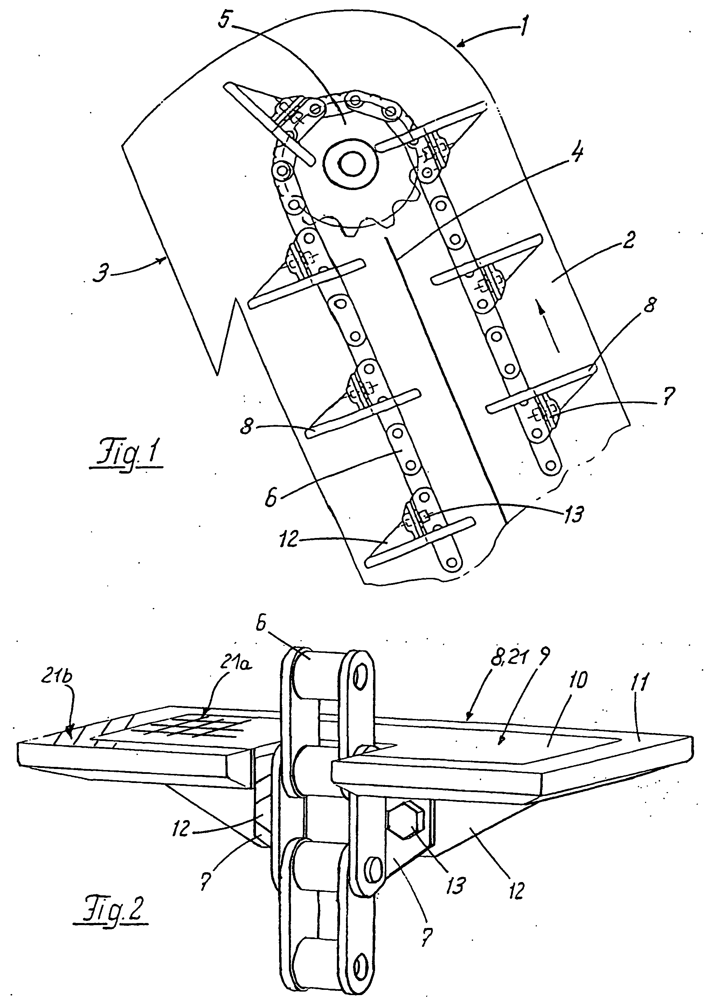

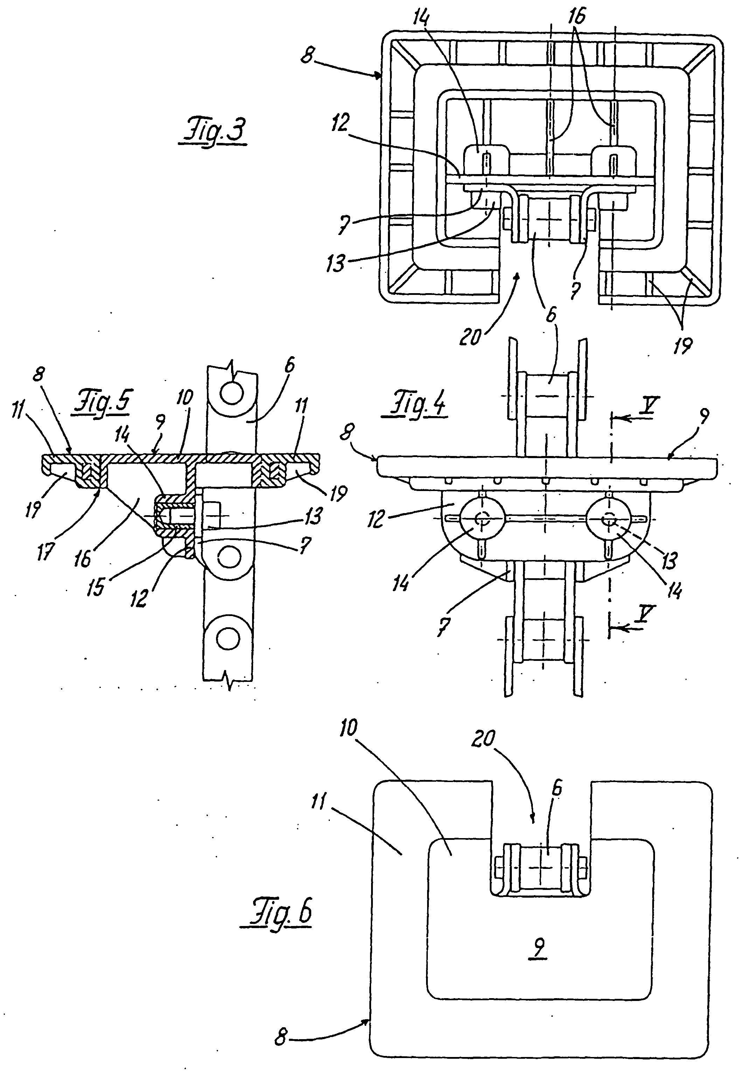

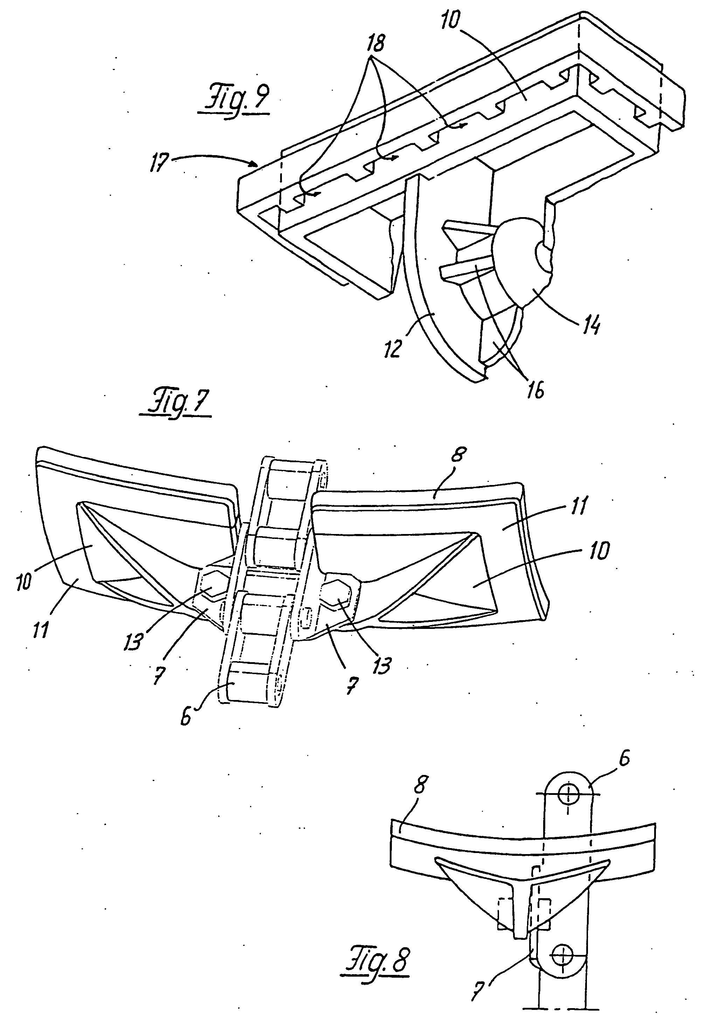

In Fig. 2 ist angedeutet, dass das Paddel 8 aus einem Paddel-Innenteil 10 und einem Paddel-Außenteil 11 besteht. Das Innenteil 10 kann beispielsweise aus Polypropylen gegebenenfalls mit einem Anteil aus GFK (glasfaserverstärkter Kunststoff) bestehen und im Spritzgussverfahren hergestellt werden, wobei gleichzeitig ein beidseitig abgestufter Befestigungsansatz 12 angespritzt wird. Das Paddel-Innenteil 10 bildet den tragenden Teil eines jeden Paddels 8. Über die Befestigungsansätze 12 sind die einzelnen Förderpaddel 8 über Laschen 7 mit der Förderkette 6 verschraubt. Um einen einwandfreien Halt der Befestigungsschrauben 13 in den Befestigungsansätzen 12 zu gewährleisten; sind an den Befestigungsansätzen 12 Zapfen 14 einstückig angeformt, in die Gewindehülsen 15 verdrehgesichert eingesetzt sind (siehe Fig. 5). Um das Paddel-Innenteil 10 möglichst dünnwandig und gewichtsarm unter gleichzeitiger Gewährung der Stabilität herstellen zu können, weist das Paddel-Innenteil 10 Verstärkungsstege 16 auf.

Insbesondere aus Fig. 9 ist zu erkennen, dass das Paddel-Innenteil 10 an seinen Randbereichen 17 beidseitig abgestuft ist und in diesen Randbereichen 17 Aufnahmeausnehmungen 18 eingebracht sind. Dieser äußere Umfang des Paddel-Innenteils 10 wird mit einem weicheren Kunststoff beispielsweise mit thermoplastischen Elastomeren (TPE) umspritzt. Das so angeformte Paddel-Außenteil 11 bildet sozusagen den Pufferteil und fängt Berührungsstöße zwischen einem Paddel 8 und dem Elevatorschacht 2 weich ab. Der weichere Kunststoff wird in die Aufnahmeausnehmungen 18 hinein gepresst, sodass das durch das Umspritzen gebildete Paddel-Außenteil 11 sowohl formschlüssig durch das Verkrallen in den Aufnahmeausnehmungen 18 als auch kraftschlüssig durch das Vernetzen beider Werkstoffe miteinander mit dem Paddel-Innenteil 10 verbunden ist. Die Abstufungen des äußeren Randbereiches des Paddel-Innenteils 10 gewährleisten, dass das Paddel-Außenteil 11 im Verbindungsbereich eine für eine sichere Verbindung ausreichende Wandstärke erhält. Aus Materialersparnissgründen weist auch das Paddel-Außenteil 11 eine Vielzahl von Verstärkungsstegen 19 auf. Zu erwähnen wäre noch, dass jedes Paddel 8 in an sich bekannter Weise einen Ausschnitt 20 für die Förderkette 6 aufweist.

In den Fig. 1 bis 6 und 9 sind Paddel mit einer ebenen Auflagefläche 8 dargestellt. Ebenso könnte diese Auflagefläche gebogen oder sphärisch ausgebildet sein, wie dies in den Fig. 7 und 8 angedeutet ist. Auch hier sind die Paddel 8 in analoger Weise zu dem Ausführungsbeispiel gemäß der Fig. 1 bis 6 mit der Kette 6 verbunden.

In einer weiteren vorteilhaften Ausgestaltung der Erfindung kann eine Vielzahl der Paddel 8 von jeweils einem Paddel-Formteil 21 gebildet werden, wobei das Paddel-Formteil 21 einen inneren Bereich 21a und einen äußeren Bereich 21b umfasst. In erfindungsgemäßer Weise verfügt der innere Bereich 21a über eine höhere Steifigkeit als der äußere Bereich 21b. Auf diese Weise wird es möglich, dass ein einstückig ausgeführtes Paddel-Formteil 21 einerseits eine höhere Steifigkeit aufweist und zugleich in seinen Randzonen 21b elastisch ist. Es liegt im Rahmen der Erfindung, dass das Paddel-Formteil 21 in nicht näher dargestellter und an sich bekannter weise direkt an dem als Endloskette 5 ausgeführten Fördermittel befestigt sein kann. Gemäß Fig. 2 kann die Abnahme der Steifigkeit des Paddel-Formteils 21 im einfachsten Fall dadurch erreicht werden, dass der Querschnitt des Paddel-Formteils 21 von seinem innern Bereich 21a zu seinem äußeren Bereich 21b abnimmt. Es liegt im Rahmen der Erfindung, dass das Paddel-Formteil 21 aus einem elastischen Kunststoff besteht und der innere, eine höhere Steifigkeit aufweisende Bereich 21a durch an sich bekannte und deshalb nicht näher beschriebene Härtung im einfachsten Fall durch UV-Härtung erzielt wird.

### Bezugszeichenliste

- 1.: Obere Teil
- 2.: Elevatorschacht
- 3.: Auswurföffnung
- 4.: Wand
- 5.: Umlenkrad
- 6.: Förderkette
- 7.: Laschen
- 8.: Paddel
- 9.: Auflagefläche
- 10.: Paddel-Innenteil
- 11.: Paddel-Außenteil
- 12.: Befestigungsansatz
- 13.: Befestigungsschrauben
- 14.: Zapfen
- 15.: Gewindehülsen
- 16.: Verstärkungsstege
- 17.: Randbereich
- 18.: Aufnahmeausnehmungen
- 19.: Verstärkungsstege
- 20.: Ausschnitt
- 21.: Paddel-Formteil
- 21a.: innere Bereich
- 21b.: äußere Bereich

## Patentansprüche

1. Gutförderer im wesentlichen bestehend aus einem zumindest teilweise von einem Gehäuse umgebenen Endlosfördermittel (6), an dem zueinander beabstandet Transportpaddel (8) mittels Laschen (7) befestigt sind,
**dadurch gekennzeichnet,**
**dass** eine Vielzahl von Paddeln (8) von zumindest einem Paddelformteil (21) gebildet werden, wobei das zumindest eine Paddelformteil (21) einen inneren Bereich (21a) und einen äußeren Bereich (21b) umfasst, welcher den inneren Bereich (21a) einrahmt und wobei der innere Bereich (21 a) eine höhere Steifigkeit als der äußere Bereich (21 b) aufweist und wobei die unterschiedlichen Steifigkeiten von der Materialstruktur der Bereiche (21a, 21 b) des Paddels (8) bestimmt werden.

2. Gutförderer nach Anspruch 1,
**dadurch gekennzeichnet,**
**dass** der Querschnitt des Paddel-Formteils (21) vom inneren Bereich (21a) zum äußeren Bereich (21b) abnimmt.

3. Gutförderer nach einem oder mehreren der vorhergehenden Ansprüche,
**dadurch gekennzeichnet,**
**dass** das Paddel-Formteil aus einem härtbaren elastischen Kunststoff besteht und der innere Bereich (21 a) durch Härtung die höhere Steifigkeit als der äußere Bereich (21b) erlangt.

4. Gutförderer im wesentlichen bestehen aus einem zumindest teilweise von einem Gehäuse umgebenen Endlosfördermittel (6), an dem zueinander beabstandet Transportpaddel (8) mittels Laschen (7) befestigt sind,
**dadurch gekennzeichnet,**
**dass** eine Vielzahl von Paddeln (8) von zumindest einem Paddel-Innenteil (10) und einem mit dem Paddel-Innenteil (10) in Wirkverbindung stehenden den Paddel-Innenteil 10 einrahmenden Paddel-Außenteil (11) gebildet werden, wobei das zumindest eine Paddel-Innenteil (10) eine höhere Steifigkeit als das wenigstens eine Paddel-Außenteil (11) aufweist und wobei die unterschiedlichen Steifigkeiten von unterschiedlichen Materialien der Teile (10, 11) bestimmt werden.

5. Gutförderer nach Anspruch 4,
**dadurch gekennzeichnet,**
**dass** das Paddel-Innenteil (10) zumindest im Bereich seines äußeren, den Wandungen des Elevatorschachtes (2) zugewandten Umfangbereiches von weicherem Material eingefasst ist, als das des Paddel-Innenteils (10).

6. Gutförderer nach einem oder mehreren der vorhergehenden Ansprüche,
**dadurch gekennzeichnet,**
**dass** das Paddel (8) eine im wesentlichen ebene Gutauflagefläche (9) aufweist.

7. Gutförderer nach einem oder mehreren der Ansprüche 4 bis 6,
**dadurch gekennzeichnet,**
**dass** beide Paddelteile (10 und 11) formschlüssig und/oder kraftschlüssig miteinander verbunden sind.

8. Gutförderer nach einem oder mehreren der Ansprüche 4 bis 7,
**dadurch gekennzeichnet,**
**dass** das Paddel. (8) an seinem äußeren, den Wandungen des Elevatorschachtes (2) zugewandtem Umfang Aufnahmeausnehmungen (18) aufweist.

9. Gutförderer nach einem oder mehreren der Ansprüche 4 bis 8,
**dadurch gekennzeichnet,**
**dass** beide Paddelteile (10 und 11) aus Kunststoff bestehen und miteinander sowohl kraft- als auch formschlüssig verbunden sind.

10. Gutförderer nach einem oder mehreren der Ansprüche 4 bis 9,
**dadurch gekennzeichnet,**
**dass** das Paddel-Innenteil (10) zumindest an seinem äußerem den Wandungen des Elevatorschachtes (2) zugewandtem Umfang mit einem im Vergleich zum Material des Paddel-Innenteils (10) weicherem Kunststoff umspritzt ist.

11. Gutförderer nach einem oder mehreren der Ansprüche 4 bis 10,
**dadurch gekennzeichnet,**
**dass** das Paddel-Innenteil (10) einen Befestigungsansatz (12) aufweist.

12. Gutförderer nach Anspruch 11,
**dadurch gekennzeichnet,**
**dass** der Befestigungsansatz (12) einstückig mit dem Paddel-Innenteil (10) ausgebildet ist.

13. Gutförderer nach einem oder mehreren der Ansprüche 11 und 12,
**dadurch gekennzeichnet,**
**dass** der Befestigungsansatz (12) Zapfen (14) aufweist, in die Gewindehülsen (15) eingebettet sind.

14. Gutförderer nach Anspruch 13,
**dadurch gekennzeichnet,**
**dass** die Gewindehülsen (15) Verdrehsicherungen aufweisen.

15. Gutförderer nach einem oder mehreren der vorhergehenden Ansprüche,
**dadurch gekennzeichnet,**
**dass** beide Paddelteile (10 und 11) aus Metall bestehen.

16. Gutförderer nach einem oder mehreren der vorhergehenden Ansprüche,
**dadurch gekennzeichnet,**
**dass** das Paddel-Innenteil (10) aus Metall und das Paddel-Außenteil (11) aus weichem Kunststoff besteht.

17. Gutförderer nach einem oder mehreren der vorhergehenden Ansprüche,
**dadurch gekennzeichnet,**
**dass** beide Paddelteile (10 und 11) miteinander verschraubt oder verklipst sind.

18. Gutförderer nach einem oder mehreren der Ansprüche 4 bis 17,
**dadurch gekennzeichnet,**
**dass** beide Paddelteile (10 und 11) an ihren der Gutauflagefläche (9) entgegengesetzten Seite Verstärkungsstege (16 bzw. 19) aufweisen.

19. Gutförderer nach einem oder mehreren der Ansprüche 4 bis 18,
**dadurch gekennzeichnet,**
**dass** der den Wandungen des Elevatorschachtes (2) zugewandte äußere Randbereich (17) des Paddel-Innenteils (10) mindestens einseitig abgestuft ist und in diesem Bereich Aufnahmeausnehmungen (18) aufweist.

20. Gutförderer nach einem oder mehreren der vorhergehenden Ansprüche,
**dadurch gekennzeichnet,**
**dass** das Paddel (8) eine nach innen gewölbte Gutauflagefläche (9) aufweist.

21. Gutförderer nach einem oder mehreren der vorhergehenden Ansprüche,
**dadurch gekennzeichnet,**
**dass** das Paddel (8) eine sphärisch ausgebildete Gutauflagefläche (9) aufweist.

22. Gutförderer nach einem oder mehreren der vorhergehenden Ansprüche,
**dadurch gekennzeichnet,**
**dass** das Paddel-Innenteil (10) aus glasfaserverstärktem Kunststoff und das Paddel-Außenteil (11) aus einem gegenüber diesem weicheren Kunststoff besteht.

23. Gutförderer nach einem oder mehreren der vorhergehenden Ansprüche,
**dadurch gekennzeichnet,**
**dass** das Paddel-Innenteil (10) aus kohlenfaserverstärktem Kunststoff und das Paddel-Außenteil (11) aus einem gegenüber diesem weicheren Kunststoff gebildet ist.

## Claims

1. A material conveyor substantially comprising an endless conveyor means (6) which is at least partially surrounded by a housing and to which transport paddles (8) are fixed in mutually spaced relationship by means of brackets (7),
**characterised in that**
a plurality of paddles (8) are formed by at least one shaped paddle portion (21), wherein the at least one shaped paddle portion (21) includes an inner region (21a) and an outer region (21b) which borders the inner region (21a) and wherein the inner region (21 a) is of a higher level of rigidity than the outer region (21b) and wherein the different levels of rigidity are determined by the material structure of the regions (21a, 21b) of the paddle (8).

2. A material conveyor according to claim 1 **characterised in that** the cross-section of the shaped paddle portion (21) decreases from the inner region (21a) to the outer region (21b).

3. A material conveyor according to one or more of the preceding claims **characterised in that** the shaped paddle portion comprises a hardenable elastic plastic material and the inner region (21a) acquires the higher level of rigidity than the outer region (21b) by hardening.

4. A material conveyor substantially comprising an endless conveyor means (6) which is at least partially surrounded by a housing and to which transport paddles (8) are fixed in mutually spaced relationship by means of brackets (7),
**characterised in that**
a plurality of paddles (8) are formed by at least one inner paddle portion (10) and one outer paddle portion (11) which is operatively connected to the inner paddle portion (10) and which borders the inner paddle portion (10), wherein the at least one inner paddle portion (10) is of a higher level of rigidity than the at least one outer paddle portion (11) and wherein the different levels of rigidity are determined by different materials of the portions (10, 11).

5. A material conveyor according to claim 4 **characterised in that** at least in the region of its outer peripheral region which is towards the walls of the elevator shaft (2) the inner paddle portion (10) is edged by softer material than that of the inner paddle portion (10).

6. A material conveyor according to one or more of the preceding claims **characterised in that** the paddle (8) has a substantially flat material contact surface (9).

7. A material conveyor according to one or more of claims 4 to 6 **characterised in that** both paddle portions (10 and 11) are connected together in positively locking and/or force-locking relationship.

8. A material conveyor according to one or more of claims 4 to 7 **characterised in that** the paddle (8) has receiving openings (18) at its outer periphery which is towards the walls of the elevator shaft (2).

9. A material conveyor according to one or more of claims 4 to 8 **characterised in that** both paddle portions (10 and 11) comprises plastic material and are connected together both in force-locking and also positively locking relationship.

10. A material conveyor according to one or more of claims 4 to 9 **characterised in that** at least at its outer periphery which is towards the walls of the elevator shaft (2) the inner paddle portion (10) has a material injection-molded therearound, which is softer in comparison with the material of the inner paddle portion (10).

11. A material conveyor according to one or more of claims 4 to 10 **characterised in that** the inner paddle portion (10) has a fixing connection (12).

12. A material conveyor according to claim 11 **characterised in that** the fixing connection (12) is provided integrally with the inner paddle portion (10).

13. A material conveyor according to one or more of claims 11 and 12 **characterised in that** the fixing connection (12) has projections (14) into which are embedded screwthreaded sleeves (15).

14. A material conveyor according to claim 13 **characterised in that** the screwthreaded sleeves (15) have rotation-preventing means.

15. A material conveyor according to one or more of the preceding claims **characterised in that** both paddle portions (10 and 11) comprise metal.

16. A material conveyor according to one or more of the preceding claims **characterised in that** the inner paddle portion (10) comprises metal and the outer paddle portion (11) comprises soft plastic material.

17. A material conveyor according to one or more of the preceding claims **characterised in that** both paddle portions (10 and 11) are screwed or clipped together.

18. A material conveyor according to one or more of claims 4 to 17 **characterised in that** both paddle portions (10 and 11) have reinforcing legs (16 and 19 respectively) at their side in opposite relationship to the material contact surface (9).

19. A material conveyor according to one or more of claims 4 to 8 **characterised**
**in that** the outer edge region (17) of the inner paddle portion (10), that is towards the walls of the elevator shaft (2), is stepped at least at one side and in that region has receiving openings (18).

20. A material conveyor according to one or more of the preceding claims **characterised in that** the paddle (8) has an inwardly curved material contact surface (9).

21. A material conveyor according to one or more of the preceding claims **characterised in that** the paddle (8) has a material contact surface (9) of a spherical configuration.

22. A material conveyor according to one or more of the preceding claims **characterised in that** the inner paddle portion (10) comprises glass fibre-reinforced plastic material and the outer paddle portion (11) comprises a plastic material which is softer than same.

23. A material conveyor according to one or more of the preceding claims **characterised in that** the inner paddle portion (10) comprises carbon fibre-reinforced plastic material and the outer paddle portion (11) comprises a plastic material which is softer than same.

## Revendications

1. Convoyeur de produit récolté, constitué pour l'essentiel d'un moyen de convoyage sans fin (6) qui est au moins partiellement entouré par un carter et auquel des palettes de transport (8) distantes les unes des autres sont fixées à l'aide de pattes (7), **caractérisé en ce qu'**une pluralité de palettes (8) sont formées par au moins une pièce moulée de palette (21), la pièce moulée de palette (21) au nombre d'au moins une comportant une zone intérieure (21a) et une zone extérieure (21b) qui entoure la zone intérieure (21a), la zone intérieure (21a) possédant une rigidité supérieure à celle de la zone extérieure (21b), et la différence de rigidité étant déterminée par la structure de la matière des zones (21a, 21b) de la palette (8).

2. Convoyeur de produit récolté selon la revendication 1, **caractérisé en ce que** la section transversale de la pièce moulée de palette (21) diminue de la zone intérieure (21a) vers la zone extérieure (21b).

3. Convoyeur de produit récolté selon une ou plusieurs des revendications précédentes, **caractérisé en ce que** la pièce moulée de palette est constituée d'une matière plastique élastique durcissable, et la rigidité supérieure de la zone intérieure (21a) par rapport à la zone extérieure (21b) est obtenue par durcissement.

4. Convoyeur de produit récolté, constitué pour l'essentiel d'un moyen de convoyage sans fin (6) qui est au moins partiellement entouré par un carter et auquel des palettes de transport (8) distantes les unes des autres sont fixées à l'aide de pattes (7), **caractérisé en ce qu'**une pluralité de palettes (8) sont formées par au moins une partie intérieure de palette (10) et par une partie extérieure de palette (11) entourant la partie intérieure de palette (10), en liaison active avec la partie intérieure de palette (10), la partie intérieure de palette (10) au nombre d'au moins une possédant une rigidité supérieure à celle de la partie extérieure de palette (11) au nombre d'au moins une, et la différence de rigidité étant déterminée par la différence de matériau entre les parties (10, 11).

5. Convoyeur de produit récolté selon la revendication 4, **caractérisé en ce qu'**au moins dans la zone de sa périphérie extérieure tournée vers les parois de la colonne d'élévateur (2), la partie intérieure de palette (10) est bordée par du matériau plus tendre que celui de la partie intérieure de palette (10).

6. Convoyeur de produit récolté selon une ou plusieurs des revendications précédentes, **caractérisé en ce que** la palette (8) possède une surface porteuse de produit récolté (9) sensiblement plane.

7. Convoyeur de produit récolté selon une ou plusieurs des revendications 4 à 6, **caractérisé en ce que** les deux parties de palette (10 et 11) sont reliées entre elles par complémentarité de formes et/ou par conjugaison de forces.

8. Convoyeur de produit récolté selon une ou plusieurs des revendications 4 à 7, **caractérisé en ce que**, sur sa périphérie extérieure tournée vers les parois de la colonne d'élévateur (2), la palette (8) est pourvue d'évidements récepteurs (18).

9. Convoyeur de produit récolté selon une ou plusieurs des revendications 4 à 8, **caractérisé en ce que** les deux parties de palette (10 et 11) sont réalisées en matière plastique et sont reliées entre elles aussi bien par conjugaison de forces que par complémentarité de formes.

10. Convoyeur de produit récolté selon une ou plusieurs des revendications 4 à 9, **caractérisé en ce qu'**au moins sur sa périphérie extérieure tournée vers les parois de la colonne d'élévateur (2), la partie intérieure de palette (10) est enrobée d'une matière plastique plus tendre que celle de la matière de la partie intérieure de palette (10).

11. Convoyeur de produit récolté selon une ou plusieurs des revendications 4 à 10, **caractérisé en ce que** la partie intérieure de palette (10) comporte un appendice de fixation (12).

12. Convoyeur de produit récolté selon la revendication 11, **caractérisé en ce que** l'appendice de fixation (12) est réalisé d'un seul tenant avec la partie intérieure de palette (10).

13. Convoyeur de produit récolté selon une ou plusieurs des revendications 11 et 12, **caractérisé en ce que** l'appendice de fixation (12) comporte des plots (14) dans lesquels sont logées des douilles filetées (15).

14. Convoyeur de produit récolté selon la revendication 13, **caractérisé en ce que** les douilles filetées (15) comportent des moyens de blocage en rotation.

15. Convoyeur de produit récolté selon une ou plusieurs des revendications précédentes, **caractérisé en ce que** les deux parties de palette (10 et 11) sont réalisées en métal.

16. Convoyeur de produit récolté selon une ou plusieurs des revendications précédentes, **caractérisé en ce que** la partie intérieure de palette (10) est réalisée en métal et la partie extérieure de palette (11) est réalisée en matière plastique tendre.

17. Convoyeur de produit récolté selon une ou plusieurs des revendications précédentes, **caractérisé en ce que** les deux parties de palette (10 et 11) sont assemblées l'une à l'autre par vissage ou par clipsage.

18. Convoyeur de produit récolté selon une ou plusieurs des revendications 4 à 17, **caractérisé en ce que**, sur leur côté opposé à la surface porteuse de produit récolté (9), les deux parties de palette (10 et 11) comportent des barrettes de renfort (16, respectivement (19).

19. Convoyeur de produit récolté selon une ou plusieurs des revendications 4 à 18, **caractérisé en ce que** la zone de bord extérieure (17) de la partie intérieure de palette (10) tournée vers la paroi de la colonne d'élévateur (2) est étagée au moins sur une face et est pourvue, dans cette zone, d'évidements récepteurs (18).

20. Convoyeur de produit récolté selon une ou plusieurs des revendications précédentes, **caractérisé en ce que** la palette (8) présente une surface porteuse de produit récolté (9) incurvée vers l'intérieur.

21. Convoyeur de produit récolté selon une ou plusieurs des revendications précédentes, **caractérisé en ce que** la palette (8) présente une surface porteuse de produit récolté (9) de conformation sphérique.

22. Convoyeur de produit récolté selon une ou plusieurs des revendications précédentes, **caractérisé en ce que** la partie intérieure de palette (10) est constituée de matière plastique renforcée aux fibres de verre, et la partie extérieure de palette (11) est constituée de matière plastique plus tendre que celle-ci.

23. Convoyeur de produit récolté selon une ou plusieurs des revendications précédentes, **caractérisé en ce que** la partie intérieure de palette (10) est formée de matière plastique renforcée aux fibres de carbone, et la partie extérieure de palette (11) est formée de matière plastique plus tendre que celle-ci.
